# FASCICULE DE BREVET EUROPEEN

(11) **EP 1 189 783 B1**
(45) Date de publication et mention de la délivrance du brevet: **09.04.2003**
(21) Numéro de dépôt: 00951619.6
(22) Date de dépôt: 20.06.2000
(51) Int. Cl.: B60K 37/02, G01D 11/30

(54) **DISPOSITIF DE FIXATION D'INSTRUMENTS SUR UNE PLANCHE DE BORD**
GERÄTEBEFESTIGUNGSVORRICHTUNG AUF EINEM ARMATURENBRETT
DEVICE FOR FIXING INSTRUMENTS ON AN INSTRUMENT PANEL

(30) Priorité: 25.06.1999 FR 9908168
(43) Date de publication de la demande: 27.03.2002
(73) Titulaire: THALES AVIONICS S.A., 78140 Vélizy-Villacoublay (FR)
(72) Inventeur: DARRIEUX, Jean-Marc, Thomson-CSF Prop. Intell., 94117 Arcueil Cedex (FR); MEYER, Guy, Thomson-CSF Prop. Intellectuelle., 94117 Arcueil Cedex (FR)
(74) Mandataire: Chaverneff, Vladimir
(86) Numéro de dépôt international: FR0001700
(87) Numéro de publication internationale: WO01000435

(56) Documents cités:
- EP-A- 0 847 889
- FR-A- 2 292 413
- US-A- 3 599 910

## Description

La présente invention se rapporte à un dispositif de fixation d'instruments sur une planche de bord, selon le préambule de la revendication 1.

Parmi les instruments fixés sur une planche de bord d'un véhicule, en particulier d'un avion, on trouve de plus en plus souvent des unités de visualisation à cristaux liquides, qui affichent généralement des images synthétiques. La performance ergonomique de tels dispositifs de visualisation est jugée en particulier par le rapport entre la surface utile de leur écran et la surface occupée par ces dispositifs sur la planche de bord. Ce rapport est relativement faible à cause de l'encombrement, au niveau de la planche de bord, du dispositif de fixation mécanique de l'unité de visualisation.

En effet, ce dispositif de fixation mécanique se présente sous forme d'un flasque plan entourant la cellule à cristaux liquides de l'unité de visualisation au niveau de cette cellule et donc augmentant notablement l'encombrement de la cellule. FR 2 292 413 décrit un dispositif de fixation selon le préambule de la revendication 1.

La présente invention a pour objet un dispositif de fixation sur une planche de bord d'instruments, en particulier d'unités de visualisation, qui n'augmente que de façon très faible l'encombrement, au niveau de la planche de bord, de la surface utile de ces instruments, qui permette un montage rapide et fiable de ces instruments sur les planches de bord, et qui améliore la tenue aux environnements vibrations de ces instruments et la dissipation de la chaleur produite, le cas échéant, par ces instruments.

Le dispositif de fixation sur une planche de bord d'un instrument contenu dans un boîtier comporte, conformément à l'invention, des brides formées sur le boîtier de l'instrument, en arrière de sa face antérieure, de préférence sensiblement au niveau de son centre de gravité, et un renfoncement formé dans la planche de bord, la section du renfoncement étant la même que celle du boîtier muni de ses brides, le fond de ce renfoncement étant percé d'une ouverture ayant la même section que celle du boîtier seul, la profondeur du renfoncement étant sensiblement égale à la longueur de la partie du boîtier comprise entre sa face antérieure et les brides, des moyens d'immobilisation du boîtier étant prévus sur le renfoncement et le boîtier. Ces moyens peuvent être avantageusement des vis imperdables fixées aux brides et des écrous ou trous filetés dans le fond au renforcement, la face antérieure de l'instrument comportant sur ses bords des perçages pour le passage d'un instrument de manoeuvre des vis imperdables.

La présente invention sera mieux comprise à la lecture de la description détaillée d'un mode de réalisation, pris à titre d'exemple non limitatif et illustré par le dessin annexé, sur lequel :
- les figures 1 et 2 sont respectivement une vue de face et une vue en perspective d'un instrument de l'art antérieur,
- les figures 3 et 4 sont respectivement une vue de face et une vue en perspective d'un instrument conforme à l'invention.
- la figure 5 est une vue de face montrant, par superposition virtuelle d'un instrument de l'art antérieur et d'un instrument conforme à l'invention, la diminution de « surface morte » réalisée par l'invention,
- la figure 6 est une vue en perspective trois-quarts arrière de l'instrument des figures 3 et 4, et
- les figures 7 et 8 sont des vues de côté de l'instrument des figures 3,4,6 lorsqu'il est respectivement partiellement et complètement introduit dans le renfoncement correspondant formé dans la planche de bord à laquelle il doit être fixé.

La présente invention est décrite ci-dessus en référence à la fixation d'un instrument, qui est un afficheur à écran à cristaux liquides, sur la planche de bord d'un avion, mais il est bien entendu qu'elle n'est pas limitée à cette seule application, et qu'elle peut être mise en oeuvre pour la fixation d'autres types d'instruments, et que les planches de bord peuvent être celles d'autres genres de véhicules (hélicoptères, véhicules terrestres et maritimes, ...) ou celles d'installations terrestres très diverses (postes de commande d'usines, appareils de mesure...).

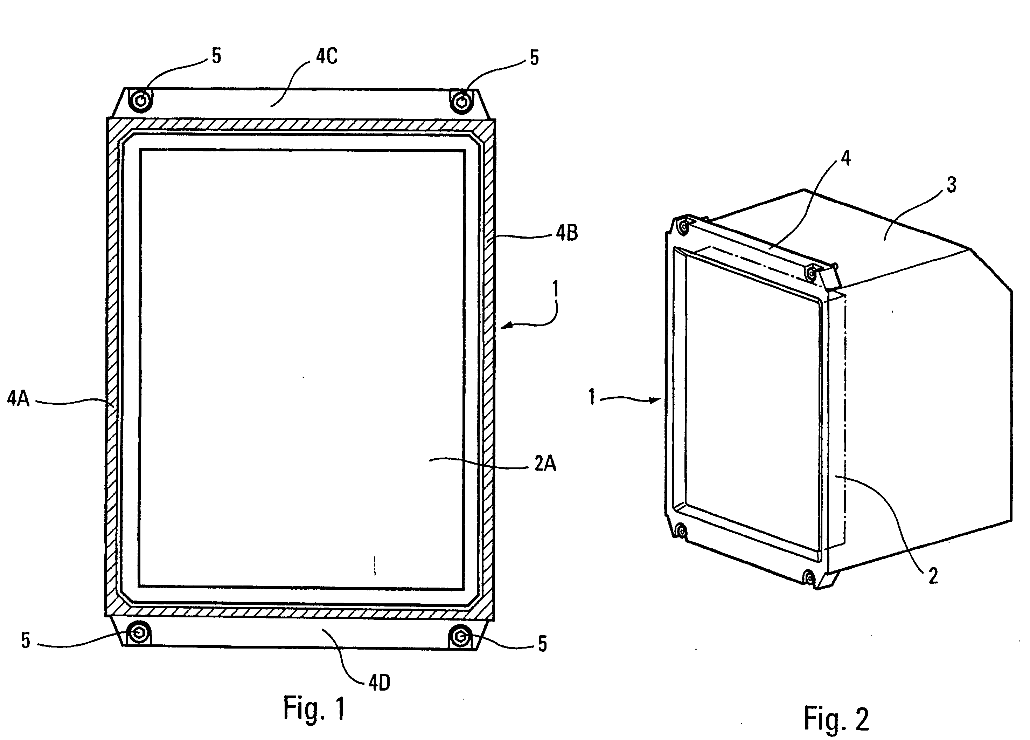

L'afficheur 1 de l'art antérieur, représenté en figures 1 et 2 comporte, à sa face antérieure, une cellule 2 à cristaux liquides formant l'écran de l'afficheur. L'afficheur 1 est disposé dans un boitier 3, ayant à peu près la forme d'un parallélépipède rectangle, dont il occupe la face antérieure. Les circuits électriques et électroniques de l'afficheur sont disposés dans le boîtier 3. Cette face antérieure est bordée sur ses quatre côtés par un flasque plan 4 qui en permet la fixation en saillie sur la planche de bord (non représentée). Dans l'exemple représenté, le flasque 4 est plus étroit le long des côtés verticaux 4A/4B (l'afficheur 1 étant supposé disposé, comme représenté sur le dessin, sur un support plan horizontal), de la cellule que le long de ses côtés horizontaux. (parties 4C et 4D). Ces parties plus larges 4C et 4D permettent la fixation de l'instrument 1 sur la planche de bord à l'aide de vis passant dans des trous 5 pratiqués dans ces parties 4C,4D. On constate que la surface utile de la cellule 2 est bordée par une « surface morte » relativement important représentée par les parties 4C et 4D du flasque 4. L'invention se propose de réduire cette surface morte sans dégrader les qualités de la fixation.

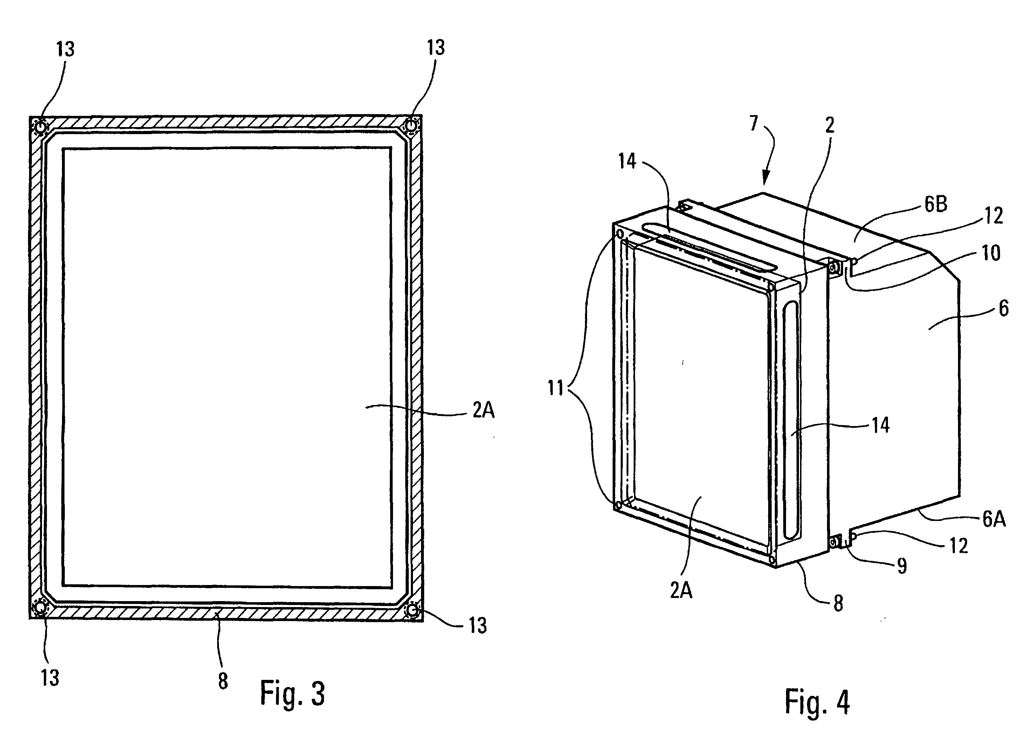

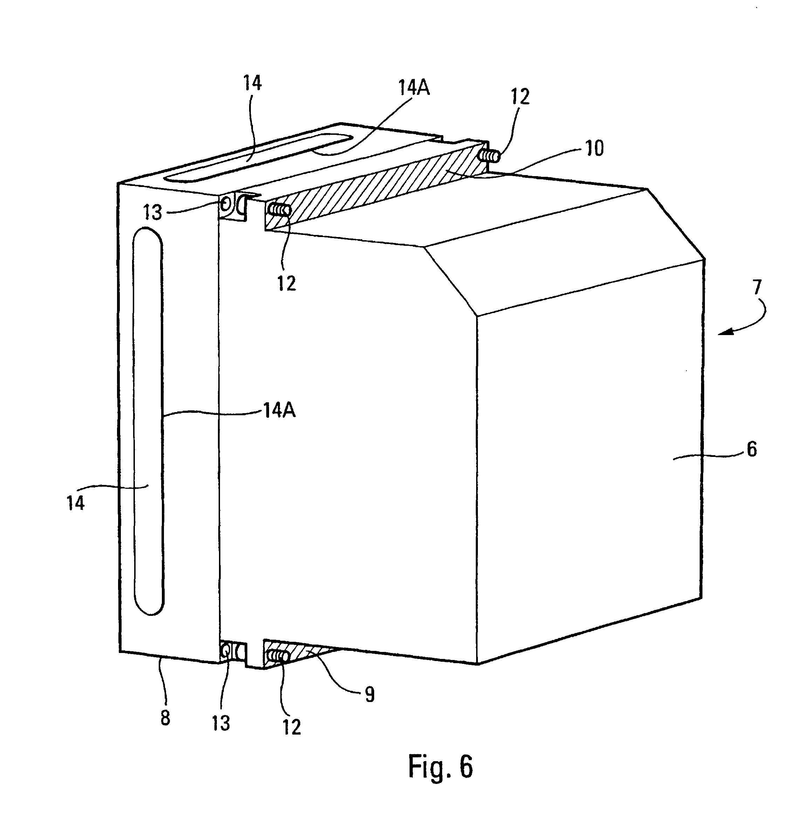

Comme représenté sur les figures 3 à 8, le boîtier 6 de l'instrument et 7 a été modifié de façon à déporter vers l'arrière sa fixation à la planche de bord, l'entourage 8 de sa face antérieure, et en particulier de sa cellule 2 pouvant ainsi être réduit au strict minimum nécessaire au maintien de la cellule dans le boîtier, en assurant éventuellement l'étanchéité entre eux. Les autres éléments de l'instrument sont identiques à ceux du boîtier des figures 1 et 2. La fixation conforme à l'invention comporte deux brides 9,10 formées sur les faces inférieure 6A et supérieure 6B du boîtier 6 parallèlement à la face antérieure de la cellule 2. Ces brides 9,10 se présentent sous forme de barrettes à section rectangulaire s'étendant sur toute la largeur des faces 6A, 6B respectivement, à égale distance de la face antérieure de la cellule 2. Cette distance est telle que le plan passant par l'axe longitudinal de ces barrettes passe le plus près possible du centre de gravité G de l'instrument 7 et en particulier à l'arrière de la cellule et de son dispositif d'éclairage, dans une zone où le boîtier présente une section plus faible qu'à sa partie antérieure. Ainsi, lorsque l'instrument est soumis à un environnement vibratoire, les vibrations qu'il subit sont le plus réduites possibles. Les brides 9,10 sont percées à leurs extrémités de trous lisses 11 dans lesquels on immobilise des vis de fixation 12 (vis imperdables). En variante, on peut supprimer les parties centrales des brides 9,10 en ne laissant subsister que leurs extrémités (oreilles de fixation), c'est à dire le strict nécessaire à la fixation de l'instrument 7 à la planche de bord. La section de ces barrettes ou oreilles peut être réduite au minimum nécessaire pour assurer leur solidité et pour pouvoir y percer les trous 11.

L'entourage 8 de la cellule 2 constitue le bord antérieur du boîtier 6. II a une épaisseur (mesurée dans le plan de l'écran de la cellule, perpendiculairement aux côtés de l'écran) de quelques millimètres et une profondeur (mesurée perpendiculairement au plan de l'écran) de 10 à 20 mm environ, c'est-à-dire supérieure à celle de la cellule 2. Dans les quatre coins de l'entourage 8, on perce des trous 13 permettant le passage d'un outil (clé ou tournevis) de serrage et de desserrage des vis 12. De façon avantageuse, on pratique sur deux des faces latérales de l'entourage 8, ou sur toutes ses faces latérales des zones de préhension 14 se présentant par exemple sous forme de renfoncements oblongs de faible profondeur (2 à 3 mm par exemple), et s'étendant sur une grande partie de la longueur de ces faces latérales à leur partie antérieure.

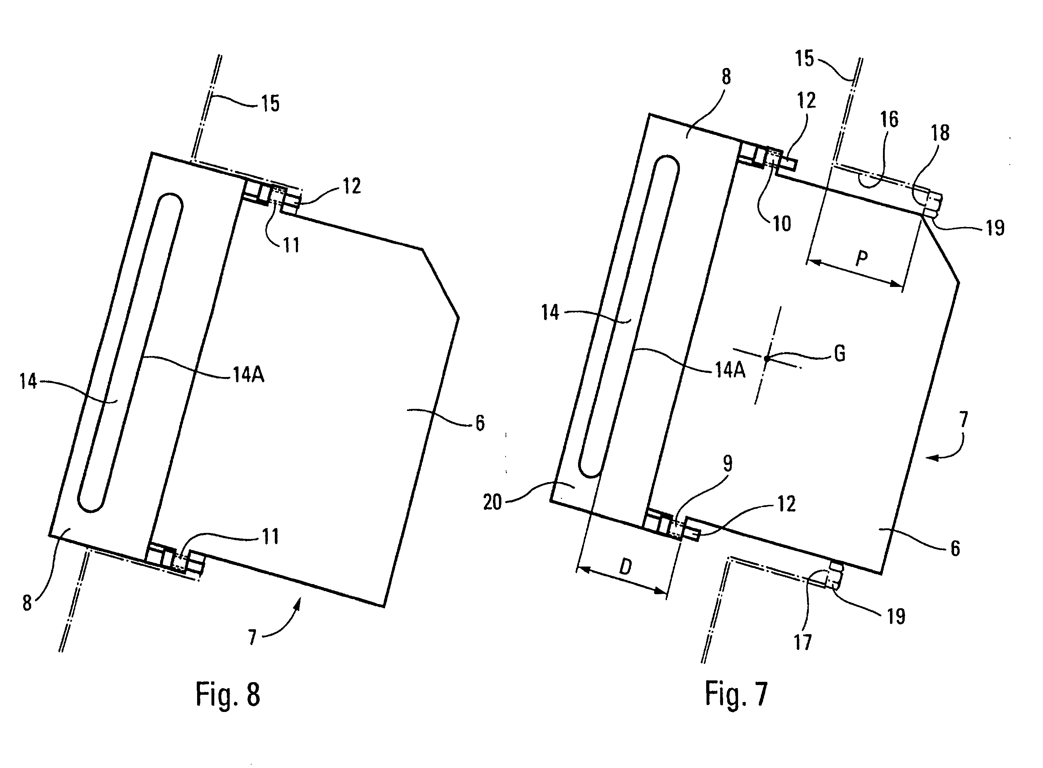

Comme représenté en figures 7 et 8, pour pouvoir fixer l'instrument 7 à la planche de bord 15, on forme dans celle-ci un renfoncement 16. La profondeur P de ce renfoncement est sensiblement égale à la distance D entre les arêtes postérieures 14 A des zones de préhension 14 et les faces postérieures des brides 9,10. La section du renfoncement 16 est égale à la section « hors tout » du boîtier 6 avec ses brides 9,10. Le fond du renfoncement 16 est percé d'une ouverture dont la section est égale à celle du boîtier 6, à l'arrière de ses brides. Ainsi, il subsiste du fond de renfoncement 16 deux surfaces 17,18 correspondant aux faces postérieures des brides 9,10 sur lesquelles ces dernières prennent appui lorsque l'instrument 7 est engagé à fond dans le renfoncement 16. En correspondance avec les vis 12, on pratique dans l'épaisseur de paroi des surfaces 17,18 des trous filetés si cette épaisseur est suffisante et si la matière de la planche de bord le permet, ou bien, comme représenté sur le dessin, on y pratique des trous lisses derrière lesquels on fixe de manière appropriée des écrous 19. Ainsi, lorsque l'instrument 7 est en place et son boîtier fixé grâce aux vis 12 et aux écrous 19, seule dépasse de la surface de la planche de bord la partie antérieure 20 de l'entourage 8 (celle située en avant des arêtes postérieures 14 A des zones 14).

Bien entendu, d'autres moyens de fixation du boîtier 6 dans le renfoncement 16 peuvent être envisagés, par exemple des moyens à enclipsage. De préférence, on utilise des éléments de fixation avec une empreinte centrale, de façon à limiter au maximum le diamètre de l'outil utilisé pour les manoeuvres (par exemple : vis CHC, CZX, cruciform, DZUS,...)

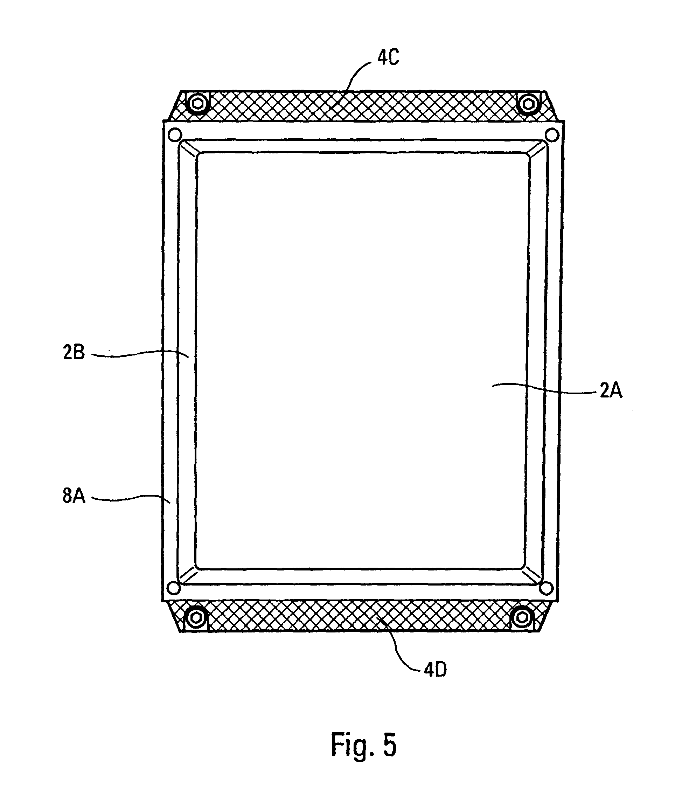

On a représenté en figure 5 la face antérieure de l'instrument 7. L'écran 2A de la cellule 2, c'est à dire sa surface utile, est entouré de son bandeau de sertissage 2B, qui est de faible largeur (quelques millimètres) et du rebord frontal 8A de l'entourage 8, qui est également de faible largeur (quelques millimètres). Par contre, comme représenté en hachuré, le dispositif de fixation de l'art antérieur comporte en plus des parties 2B et 8A, les parties 4C et 4D. Il en résulte que, grâce à l'invention, l'élimination des surfaces mortes 4C, 4D réduit notablement la surface morte totale autour de l'écran 2A (d'environ 30 %).

## Revendications

1. Dispositif de fixation sur une planche de bord (15) d'un instrument (7) contenu dans un boîtier (6), comportant des brides (9,10) formées sur le boîtier de l'instrument, et un renfoncement (16) formé dans la planche de bord, la section de ce renfoncement étant la même que celle du boîtier muni de ses brides, le fond de ce renfoncement étant percé d'une ouverture ayant la même section que celle du boîtier seul, la profondeur du renfoncement étant sensiblement égale à la longueur de partie du boîtier comprise entre sa face antérieure et les brides, des moyens d'immobilisation (12,19) du boîtier étant prévu sur le renfoncement et le boîtier **caractérisé en ce que** les brides (9,10) sont situées en arrière de la face antérieure du boîtier de l'instrument.

2. Dispositif selon la revendication 1, **caractérisé en ce que** les brides sont formées sensiblement au niveau du centre de gravité (G) du boîtier.

3. Dispositif selon la revendication 2, **caractérisé en ce que** les brides sont formées à l'arrière de la cellule et de son dispositif d'éclairage, dans une zone où le boîtier présente une section plus faible qu'à sa partie antérieure.

4. Dispositif selon la revendication 1,2 ou 3, **caractérisé en ce que** les moyens d'immobilisation comportent des vis imperdables (12) fixées aux brides et des écrous ou trous filetés (19) dans le fond (17,18) du renfoncement, la face antérieure de l'instrument comportant sur ses bords des perçages (13) pour le passage d'un instrument de manoeuvre des vis imperdables.

5. Dispositif selon l'une des revendications précédentes, **caractérisé en ce que** la partie antérieure du boîtier comporte un entourage (8) dans lequel sont formées des zones de préhension (14), ces zones de préhension dépassant de la planche de bord lorsque l'instrument y est fixé.

6. Dispositif selon l'une des revendications précédentes, **caractérisé en ce que** l'instrument est un afficheur à écran à cristaux liquides.

## Claims

1. Device for fixing to an instrument panel (15) an instrument (7) contained in a casing (6), comprising flanges (9, 10) formed on the instrument casing and a recess (16) formed in the instrument panel, the cross section of this recess being the same as that of the casing with its flanges, the bottom of this recess being pierced with an opening having the same cross section as the casing alone, the depth of the recess being practically equal to the length of that part of the casing that lies between its anterior face and the flanges, means (12, 19) for immobilizing the casing being provided on the recess and on the casing, **characterized in that** the flanges (9, 10) are behind the anterior face of the instrument casing.

2. Device according to Claim 1, **characterized in that** the flanges are formed more or less at the centre of gravity (G) of the casing.

3. Device according to Claim 2, **characterized in that** the flanges are formed at the rear of the cell and of its illuminating device, in a region in which the casing has a smaller cross section than it does at its anterior part.

4. Device according to Claim 1, 2 or 3, **characterized in that** the immobilizing means comprise captive screws (12) fixed to the flanges, and nuts or threaded holes (19) in the bottom (17, 18) of the recess, the anterior face of the instrument having, on its edges, drillings (13) for the passage of an instrument used for manipulating the captive screws.

5. Device according to one of the preceding claims, **characterized in that** the anterior part of the casing has a surround (8) in which regions (14) for grasping are formed, these regions for grasping protruding from the instrument panel when the instrument is fixed therein.

6. Device according to one of the preceding claims, **characterized in that** the instrument is a liquid-crystal display screen.

## Patentansprüche

1. Vorrichtung zum Befestigen eines in einem Gehäuse (6) enthaltenen Instruments (7) an einem Instrumentenbrett (15), mit Flanschen (9, 10), die an dem Gehäuse des Instruments ausgebildet sind, und einem Rücksprung (16), der in dem Instrumentenbrett ausgebildet ist, wobei der Querschnitt dieses Rücksprungs gleich demjenigen des mit seinen Flanschen versehenen Gehäuses ist, wobei der Boden dieses Rücksprungs von einer Öffnung durchsetzt ist, die den gleichen Querschnitt wie das Gehäuse alleine hat, wobei die Tiefe des Rücksprungs im wesentlichen gleich der Länge des Teils des Gehäuses ist, das zwischen seiner Vorderseite und den Flanschen enthalten ist, wobei Festlegungsmittel (12, 19) für das Gehäuse an dem Rücksprung und dem Gehäuse vorgesehen sind, **dadurch gekennzeichnet, daß** die Flansche (9, 10) hinter der Vorderseite des Gehäuses des Instruments liegen.

2. Vorrichtung nach Anspruch 1, **dadurch gekennzeichnet, daß** die Flansche im wesentlichen auf Höhe des Schwerpunkts (G) des Gehäuses ausgebildet sind.

3. Vorrichtung nach Anspruch 2, **dadurch gekennzeichnet, daß** die Flansche am hinteren Teil der Zelle und ihrer Beleuchtungseinrichtung in einer Zone ausgebildet sind, wo das Gehäuse einen niedrigeren Querschnitt als an seinem vorderen Teil aufweist.

4. Vorrichtung nach Anspruch 1, 2 oder 3, **dadurch gekennzeichnet, daß** die Festlegungsmittel unverlierbare Schrauben (12), die an den Flanschen befestigt sind, sowie Muttern oder Gewindelöcher (19) in dem Boden (17, 18) des Rücksprungs aufweisen, wobei die Vorderseite des Instruments an ihren Rändern Bohrungen (13) zum Durchgang für ein Instrument zum Bedienen der unverlierbaren Schrauben aufweist.

5. Vorrichtung nach einem der vorhergehenden Ansprüche, **dadurch gekennzeichnet, daß** der vordere Teil des Gehäuses eine Einfassung (8) aufweist, in der Greifzonen (14) ausgebildet sind, wobei diese Greifzonen über das Instrumentenbrett vorstehen, wenn das Instrument daran befestigt ist.

6. Vorrichtung nach einem der vorhergehenden Ansprüche, **dadurch gekennzeichnet, daß** das Instrument eine LCD-Anzeige ist.
